# EUROPÄISCHE PATENTSCHRIFT

(11) **EP 3 642 021 B1**
(45) Veröffentlichungstag und Bekanntmachung des Hinweises auf die Patenterteilung: **06.01.2021**
(21) Anmeldenummer: 18762234.5
(22) Anmeldetag: 17.08.2018
(51) Int. Cl.: B29C 70/88, B32B 5/14, B32B 15/08, B32B 27/20, B29C 70/60, B29C 70/02

(54) **MULTI-MATERIAL-VERBUND UND VERFAHREN ZU DESSEN HERSTELLUNG**
MULTI-MATERIAL COMPOSITE AND METHOD FOR PRODUCING SAME
COMPOSITE MULTI-MATÉRIAU ET PROCÉDÉ DE FABRICATION

(30) Priorität: 17.08.2017 DE 102017214334
(43) Veröffentlichungstag der Anmeldung: 29.04.2020
(73) Patentinhaber: Technische Universität Dresden, 01069 Dresden (DE)
(72) Erfinder: FILIPPATOS, Angelos, 01307 Dresden (DE); WOLZ, Daniel Sebastian, 01099 Dresden (DE); JÄGER, Hubert, 01156 Dresden (DE); KOCH, Ilja, 03044 Cottbus (DE)
(74) Vertreter: Kailuweit & Uhlemann Patentanwälte Partnerschaft mbB
(86) Internationale Anmeldenummer: PCT/EP2018/072334
(87) Internationale Veröffentlichungsnummer: WO 2019/034777

(56) Entgegenhaltungen:
- WO-A2-2012/096482
- US-A1- 2015 166 743

## Beschreibung

Die Erfindung betrifft ein Verfahren zur Herstellung eines Multi-Material-Verbunds, der eine Metallschicht und eine faserverstärkte oder unverstärkte erste Polymerschicht umfasst, sowie einen zugehörigen Multi-Material-Verbund.

Multi-Material-Verbunde in Mischbauweise, die Grenzflächen zwischen Metallen und Kunststoffen aufweisen, beispielsweise in Form von Faser-Kunststoff-Verbund-Bauteilen mit metallischen Lasteinleitungselementen, kommen in vielfältigen Anwendungsgebieten zum Einsatz, insbesondere, wenn neben der Reduktion des bewegten Gewichts und verbesserten Festigkeits- bzw. Steifigkeitseigenschaften auch eine hohe Schlagzähigkeit und Härte sowie eine hohe Dehnbarkeit gefordert ist. Um nur ein Beispiel herauszugreifen, sind Antriebswellen für die Luftfahrt-, Automobil-, oder Schifffahrtbranche zu nennen.

Eine Herausforderung für den Einsatz der Multi-Material-Verbunde als Leichtbau-Strukturen besteht dabei in der zur Kraftübertragung geeigneten Anbindung der metallischen an die Kunststoff-Elemente. Die Anbindung kann beispielsweise stoffschlüssig durch Kleben erfolgen. Ohne Einsatz von Klebstoffen können die Materialien beispielsweise mittels Press-, Infiltrations- und/oder Spritzgussverfahren gefügt werden. In Verfahren wie dem in der DE 10 2016 202 012 B3 für duroplastische Kunststoffe und dem in der DE 10 2014 004 158 A1 für thermoplastische Kunststoffe beschriebenen erfolgt eine formschlüssige Anbindung eines FKV-Elements an das metallische Lasteinleitungselement ohne den Einsatz von Klebstoffen.

Die nicht mischbaren Materialen der Multi-Material-Verbunde weisen unterschiedliche Werkstoffeigenschaften, z. B. Bruchzähigkeit, Härte und Festigkeit, auf. Insbesondere in Verbindungs- oder Fügeverfahren zur Herstellung des Multi-Material-Verbunds, in denen kein Klebstoff eingesetzt wird, kann es unter anderem aufgrund der sprunghaften Änderung der Festigkeit oder der Riss-/Bruchzähigkeit an der Grenzfläche zwischen den Materialien bei der Übertragung von Spannungsbelastungen zur Rissbildung und Risserweiterung im weicheren der Materialien kommen. Dies kann zum Ausfall des Multi-Material-Verbunds führen.

Es ist bekannt, z. B. aus Ma, P.-C., et al.: "Dispersion and functionalization of carbon nanotubes for polymer-based nanocomposites: A review", Compos. Part. A: Appl. Sci. Manuf., 41 (2010), S. 1345-1367, dass durch die Modifikation von polymeren Materialien mit Nanopartikeln deren Bruchzähigkeit, Festigkeit und Steifigkeit erhöht werden kann, wobei der Grad der Erhöhung unter anderem von der Konzentration an Nanopartikeln im Material abhängt. Besonders günstige Werkstoffeigenschaften können durch Modifikation der polymeren Materialien mit kohlenstoffbasierten Nanopartikeln erreicht werden, insbesondere mit Kohlenstoff-Nanoröhrchen (carbon nanotubes, CNT). Eine vollständige, globale Modifikation des Polymers mit Nanopartikeln führt zu einer Änderung der Makroeigenschaften des Polymers. Insbesondere kann das Polymer spröder werden, was in bestimmten Einsatzfällen zu Materialversagen führen kann.

Die US 8388795 B2 und die EP 2926987 A1 beschreiben Verfahren zur Herstellung eines Materialverbunds, bei denen zwei Schichten eines Fasermaterials durch eine nanopartikelenthaltende Schicht verbunden werden, indem die Schichten zueinander positioniert und die Faserschichten dann mit Matrixmaterial getränkt werden. Die beschriebenen Verfahren beziehen sich nicht auf Multi-Material-Verbunde mit Metall-Polymer-Grenzflächen, und es wird keine Lösung angegeben, wie der Neigung zur Rissbildung an solchen Grenzflächen entgegengewirkt werden kann.

In der US 2013 / 0108800 A1 ist ein Verfahren zum Bilden einer Schutzbeschichtung auf Substraten mit Nanopartikel enthaltenden Schichten offenbart. Die Schutzbeschichtung verbessert die Barriereeigenschaften, so dass die Diffusion von Flüssigkeiten, gelösten Stoffen und/oder Gasen in das Substrat gehemmt und verzögert wird. Die Schutzbeschichtung kann aus einer Binderschicht mit polymerer Zusammensetzung und einer Nanofüllstoffschicht bestehen oder aus einer Vielzahl sich abwechselnder Binder- und Nanofüllstoffschichten. Auch kann innerhalb der Schutzbeschichtung ein Gradient der Nanofüllstoffe vorliegen.

In der DE 196 13 645 A1 wird ein Verfahren zur Herstellung optischer Bauteile mit Gradientenstruktur offenbart. In einer flüssigen, härtbaren Matrix dispergierte nanoskalige Teilchen wandern innerhalb der Matrix aufgrund einer Potentialdifferenz und bilden somit einen Stoffgradienten aus, bspw. einen Brechwert-Gradienten in optischen Linsen.

In der US 020100227141 A1 wird eine Schutzschicht für industrielle Werkzeuge, bspw. Matrizen und ein Verfahren zur Bildung der Schutzschicht offenbart. Derartige Schutzschichten weisen eine erste Schutzschicht und mindestens eine weitere Schutzschicht auf, wobei die erste Schutzschicht Markerpartikel enthält und die weitere Schicht keine Markerpartikel enthalten kann. Ein Verschleiß der Schutzschicht kann damit optisch erkannt werden, so dass die Schutzschicht rechtzeitig erneuert werden kann.

In der WO 2008 071312 A1 ist ein folien-, band- oder blechartiges Flächengebilde offenbart, in dem eine Schicht eines Metalls und/oder eine Schicht eines Polymers abwechslungsweise mit wenigstens einer Lage CNT übereinander geschichtet vorliegen. Die Herstellung des Flächengebildes erfolgt durch ein Walzverfahren. Auch hier wird keine Lösung angegeben, wie der Neigung zur Rissbildung an den Grenzflächen zwischen den Materialien entgegengewirkt werden kann. WO 2012 096482 offenbart die Merkmale der Oberbegriffe der Ansprüchen 1 und 9.

Ein Ansatz zur Verringerung der Rissbildungsneigung in Multi-Material-Verbunden kann darin bestehen, die sprunghafte Änderung der Werkstoffeigenschaften an einer Grenzfläche zwischen verschiedenen Materialien zu glätten und die Werkstoffeigenschaften in einer Schicht an der Grenzfläche graduell zu verändern.

Die CN 1510069 A offenbart ein Verfahren zur Herstellung eines polymeren Gradientenwerkstoffs, z. B. aus Polypropylen mit PA-6 oder Polypropylen mit Talkum, der sich durch eine örtlich graduell abgestufte Konzentration der Materialien auszeichnet. Die Herstellung des Werkstoffs erfolgt durch Extrudieren, indem der Extruder mit den Ausgangsmaterialien in den gewünschten, graduell abgestuften Konzentrationen beschickt wird. In der WO 2011 039 009 A2 ist eine Methode zur Erzeugung einer Gradientenschicht mittels Brush Plating beschrieben, bei der sehr dünne Lagen von nanopartikelenthaltenden Materialien auf das Ausgangsmaterial aufgetragen werden und die Konzentration der Nanopartikel von Lage zu Lage graduellverändert wird. Beide Verfahren sind sehr aufwändig.

Aufgabe der Erfindung ist es, ausgehend vom Stand der Technik ein Verfahren zur Herstellung von Multi-Material-Verbunden und einen Multi-Material-Verbund vorzuschlagen, welche die Nachteile des Stands der Technik überwinden und durch die einer aufgrund unterschiedlicher Werkstoffeigenschaften in Multi-Material-Verbunden induzierten Rissbildung und Rissausbreitung vorgebeugt wird.

Die Aufgabe wird gelöst durch ein Verfahren mit den in Anspruch 1 und einen Multi-Material-Verbund mit den in Anspruch 9 aufgeführten Merkmalen. Weiterbildungen der Erfindung sind in Unteransprüchen angegeben.

Das erfindungsgemäße Verfahren basiert auf einer graduellen Anpassung der Werkstoffeigenschaften eines der Materialien an die des anderen Materials an der Grenzfläche zwischen den Materialen eines Multi-Material-Verbunds unter Beibehaltung der Makroeigenschaften der Materialien.

Das erfindungsgemäße Verfahren betrifft die Herstellung eines Multi-Material-Verbunds, der mindestens eine Metallschicht sowie mindestens eine faserverstärkte oder unverstärkte erste Polymerschicht aufweist. Im Falle einer faserverstärkten Ausführung der Polymerschicht fungiert das Polymer dann als Matrix, in die die Fasern eingebettet sind.

Zumindest bereichsweise ist zwischen der Metallschicht und der ersten Polymerschicht eine zweite, ebenfalls faserverstärkt oder unverstärkt ausführbare Polymerschicht angeordnet, die Nanopartikel enthält. Durch die Nanopartikel weist die zweite Polymerschicht Werkstoffeigenschaften auf, die derer der Metallschicht ähnlicher sind als den Werkstoffeigenschaften der ersten Polymerschicht ohne Nanopartikel.

Unter Einfluss von erhöhter Temperatur oder erhöhtem Druck und erhöhter Temperatur wird aus den drei Schichten ein Verbund gebildet, wobei Nanopartikel der zweiten Polymerschicht in die erste Polymerschicht diffundieren, so dass eine Gradientenschicht gebildet wird, in der die Nanopartikelkonzentration zur ersten Polymerschicht hin graduell abnimmt. "Erhöht" bezieht sich dabei zwar auf Normalbedingungen (101 325 Pa, 20 °C). Dem Fachmann ist aber klar, dass die Anwendung der Parameter Druck und/oder Temperatur so zu erfolgen hat, dass eine Verringerung der Viskosität des polymeren Materials im Fügebereich bewirkt wird, ohne dass sich das Polymer zersetzt.

An der Grenzfläche der Gradientenschicht zur Metallschicht liegt demnach eine höhere Nanopartikelkonzentration in der Gradientenschicht vor als an der Grenzfläche zur ersten Polymerschicht. Als Grenzfläche zwischen der ersten Polymerschicht und der Gradientenschicht bzw. als Beginn der Gradientenschicht ist derjenige Bereich anzusehen, in dem erstmalig Nanopartikel vorhanden sind. An der Grenzfläche der Gradientenschicht zur Metallschicht ist die Nanopartikelkonzentration nur wenig kleiner oder gleich der Nanopartikelkonzentration in der zweiten Polymerschicht vor der Anwendung von Druck und/oder Temperatur zur Bildung des Verbunds.

Unter der "ersten Polymerschicht" ist eine nanopartikelfreie Polymerschicht zu verstehen. Insofern werden durch das Verfahren die an die zweite Polymerschicht grenzenden Bereiche der ersten Polymerschicht aufgezehrt, da die Gradientenschicht aus der zweiten Polymerschicht und aus an die zweite Polymerschicht angrenzenden Bereichen der ersten Polymerschicht gebildet wird, indem Nanopartikel aus der zweiten Polymerschicht in die erste Polymerschicht diffundieren.

Unter "Nanopartikeln" sind nanoskalige Füllstoffe zu verstehen. Für das Verfahren eignen sich Nanopartikel, mittels derer die Werkstoffeigenschaften des Polymers der zweiten Polymerschicht an die des Metalls angepasst werden können, z. B. durch Erhöhung der Festigkeit.

Durch das erfindungsgemäße Verfahren wird der stufenhafte Verlauf verschiedener Werkstoffeigenschaften an der Grenzfläche zwischen erster Polymerschicht und Metallschicht geglättet, da sich in der Gradientenschicht die Werkstoffeigenschaften graduell von metallähnlich zu polymerähnlich in Richtung der ersten Polymerschicht verändern. Vorteilhaft wird dadurch die Neigung zur Rissbildung und die Rissausbreitung an den Grenzflächen vermindert. Die Lebensdauer des Multi-Material-Verbunds wird erhöht.

Mit anderen Worten erfolgt mittels des erfindungsgemäßen Verfahrens zumindest bereichsweise eine graduelle Anpassung polymerer Werkstoffeigenschaften an metallische Werkstoffeigenschaften im Verbindungsbereich eines Multi-Material-Verbunds mit mindestens einer metallischen und mindestens einer polymeren Schicht durch lokale Nanomodifikation des polymeren Werkstoffs im Verbindungsbereich. Eine globale Änderung der polymeren Werkstoffeigenschaften, d.h. eine Änderung über einen ausgedehnten, insbesondere den gesamten, Volumenbereich der ersten Polymerschicht, erfolgt dabei erfindungsgemäß nicht. Die Nanomodifikation des polymeren Werkstoffs ist räumlich auf den Diffusionsbereich der Nanopartikel an der Verbindung zwischen Metallschicht und polymerem Werkstoff und damit auf die Ausdehnung der Gradientenschicht beschränkt.

Die Ausdehnung der Gradientenschicht wird bestimmt durch die Diffusionseigenschaften der Nanopartikel im polymeren Werkstoff sowie durch Stärke und Zeitdauer der Anwendung der Parameter Druck und/oder Temperatur, wobei die Dauer der Anwendung bevorzugt zwischen wenigen Minuten und ein bis zwei Stunden beträgt. Bei bekanntem polymeren Werkstoff ist der Fachmann ohne weiteres in der Lage zu ermitteln, wie die Anwendung der Parameter Druck und/oder Temperatur zu erfolgen hat, um die nötige Verringerung der (dynamischen) Viskosität des polymeren Materials im Fügebereich zu bewirken, ohne dass sich das Polymer zersetzt. Die Verringerung der Viskosität bewirkt eine Erhöhung des Diffusionskoeffizienten. Infolgedessen kommt es zur Diffusion von Nanopartikeln aus der zweiten in die erste Polymerschicht. Die Ausdehnung der Gradientenschicht beträgt bevorzugt 10 µm bis 1 mm, besonders bevorzugt zwischen 50 µm und 500 µm, ganz besonders bevorzugt zwischen 100 µm und 300 µm.

Der sich in Abhängigkeit von Temperatur oder Temperatur und Druck ausbildende Gradient der Nanopartikelkonzentration kann z. B. iterativ am konsolidierten Werkstoff durch eine Widerstandsmessung mittels Vierspitzentechnik evaluiert werden. Die Messanordnung ist dabei so zu wählen, dass eine ausreichende Evaluation der graduierten Schichterfolgen kann. Bei einer Ausdehnung der Gradientenschicht von 100 µm entspricht dies beispielsweise einer lateralen Mindestauflösung von 30 µm. Die Änderung des Widerstands ergibt sich in Abhängigkeit des Nanopartikelgehalts. Zur Evaluation sind planare Modellsysteme des FKV mit bekannter Nanopartikelkonzentration zu messen, woraus sich eine Widerstand-Nanopartikelkonzentration-Kurve ermitteln lässt. Durch die Korrelation der gemessenen Widerstände an der Gradientenschicht mit der Widerstand-Nanopartikelkonzentration-Kurve kann die lokale Nanopartikelkonzentration und damit der Fortschritt der Graduierungsfront sowie der lokale Gradient bestimmt werden.

Der Gradient der Nan opartikelkonzentration wird durch Abkühlung und/oder Konsolidierung mit endgültiger Aushärtung des Verbunds stabilisiert. Wie die Stabilisierung der Gradientenschicht zu erfolgen hat, wird durch die Art des polymeren Werkstoffs der Gradientenschicht bestimmt, wobei dem Fachmann klar ist, welche Methode zu wählen ist.

Die Polymerschichten können faserverstärkt oder unverstärkt sein. Bevorzugt ist zumindest die erste Polymerschicht faserverstärkt, besonders bevorzugt kohlenstofffaserverstärkt.

Prinzipiell können für das erfindungsgemäße Verfahren alle geeigneten Fasern und Faserhalbzeuge, beispielsweise Rovings, Vliese, Matten, Gelege, Gewebe, Geflechte, eingesetzt werden, so lange der freie Diffusionsweg der Nanopartikel genügend groß ist, um eine Gradientenschicht auszubilden. Es kann davon ausgegangen werden, dass ein Faservolumengehalt von bis zu 60 % durchaus einen ausreichenden Diffusionsweg gewährleistet. Das Verfahren eignet sich prinzipiell zum Einsatz mit allen geeigneten Verstärkungsfasertypen, insbesondere Kohlenstofffasern.

Das Verfahren kann für alle zum Einsatz in Multi-Material-Verbunden geeigneten Metalle und metallischen Legierungen angewendet werden, z. B. Stahl, Aluminium, Titan. Die Schmelztemperatur der metallischen Schicht muss dabei höher sein als die zur Ausbildung der Gradientenschicht und des Verbunds anzuwendende Temperatur bzw. als die Aushärtungstemperatur des polymeren Werkstoffs.

Das Verfahren zeichnet sich durch eine besonders einfache Anwendung aus. In den Produktionsprozess der Metallschicht und der ersten Polymerschicht wird dabei nicht eingegriffen. Die Fertigung der Metallschicht bzw. des Bauteils, das diese enthält, und die Fertigung der ersten Polymerschicht, bzw. des Bauteils, das diese enthält, können separat erfolgen. Die Applikation der zweiten, nanopartikelenthaltenden Polymerschicht, die Bildung eines Verbunds und die Erzeugung der Gradientenschicht erfolgt erst nachträglich durch den thermischen oder mechanischen und thermischen Fügevorgang mittels Temperaturerhöhung oder Druck- und Temperaturerhöhung.

Das erfindungsgemäße Verfahren kann z. B. die folgenden Verfahrensschritte aufweisen:
a. Bereitstellung eines Bauteils, das die Metallschicht aufweist;
b. Bereitstellung eines Bauteils, das die faserverstärkte oder unverstärkte erste Polymerschicht aufweist;
c. Bereichsweise oder vollständige Applikation der zweiten Polymerschicht auf der Metallschicht und/oder auf der ersten Polymerschicht;
d. Positionieren der Bauteile relativ zueinander, so dass die zweite Polymerschicht zumindest bereichsweise zwischen der Metallschicht und der ersten Polymerschicht angeordnet ist;
e. Erwärmen oder Erwärmen und Ausüben von Druck in einem Heiz- oder Heiz- und Presswerkzeug zumindest in dem Bereich, in dem die zweite Polymerschicht zwischen der Metallschicht und der ersten Polymerschicht angeordnet ist zur Bildung eines Verbunds, wobei Nanopartikel der zweiten Polymerschicht in die erste Polymerschicht diffundieren, so dass eine Gradientenschicht gebildet wird, in der die Nanopartikelkonzentration zur ersten Polymerschicht hin abnimmt;
f. Ggf. endgültiges Aushärten des Verbunds, Abkühlen und Entformen aus dem in Verfahrensschritt e. verwendeten Heiz- oder Heiz- und Presswerkzeug.

Das Erwärmen sowie das Ausüben von Druck erfolgt bevorzugt lokal begrenzt auf den Verbindungsbereich, in dem die zweite Polymerschicht zwischen der Metallschicht und der ersten Polymerschicht angeordnet ist.

Das Ausüben von Druck auf den Verbund kann beispielsweise mittels eines externen, beheizbaren Werkzeugs erfolgen, oder intrinsisch durch eine thermoinduzierte Volumenänderung des Polymers, oder durch eine Kombination beider Möglichkeiten.

Die Erwärmung des Verbindungsbereichs kann über die lokale Beheizung der Metallschicht oder über die lokale Beheizung der ersten Polymerschicht, sofern diese wärmeleitfähige Verstärkungsfasern enthält, erfolgen, oder es kann eine externe globale Erwärmung des Verbunds durchgeführt werden.

Als Polymere der ersten und der zweiten Schicht können thermoplastische Polymere oder spezielle duroplastische Polymere eingesetzt werden.

In einer Ausführungsform des erfindungsgemäßen Verfahrens ist das Polymer der ersten und der zweiten Polymerschicht ein thermoplastisches Polymer. Thermoplastische Polymere sind in einem bestimmten Temperaturbereich zwischen ihrer Schmelz- bzw. Glasübergangstemperatur und ihrer Zersetzungstemperatur niedrigviskos und leicht verformbar, wobei das Erreichen dieses Zustands durch Abkühlung und Wiedererwärmung beliebig oft wiederholt werden kann, solange nicht durch Überhitzung die thermische Zersetzung des Materials einsetzt.

Zur Durchführung dieser Ausführungsform des erfindungsgemäßen Verfahrens werden die erste und die zweite Polymerschicht im Verbindungsbereich bis auf eine Temperatur oberhalb ihrer Schmelz- bzw. Glasübergangstemperatur und unterhalb ihrer Zersetzungstemperatur erhitzt. Dadurch wird der thermoplastische Werkstoff in einen niedrigviskosen Zustand überführt.

"Niedrigviskos" bedeutet im Sinne der Erfindung, dass die Viskosität ausreichend geringe Werte aufweist, um durch Diffusion der Nanopartikel aus der zweiten in die erste Polymerschicht eine Gradientenschicht auszubilden. Die Nanopartikel diffundieren aus der zweiten Polymerschicht in die erste Polymerschicht, und es wird ein Verbund gebildet, der die Gradientenschicht umfasst. Die Stabilisierung des Gradienten der Nanopartikelverteilung und das Erstarren des Verbunds erfolgt durch Abkühlung des Verbunds unter die Schmelz- bzw. Glasübergangstemperatur des thermoplastischen Polymers.

In einer weiteren Ausführungsform des erfindungsgemäßen Verfahrens ist das Polymer der ersten und der zweiten Polymerschicht ein duroplastisches Polymer. Duroplastische Polymere können zwar im Allgemeinen im vollständig ausgehärteten Zustand nicht mehr durch Temperatureinwirkung aufgeschmolzen werden. Viele duroplastische Polymere weisen mehrstufige Konsolidierungsfunktionen auf (z. B. A-Zustand, B-Zustand, C-Zustand). Bei diesen duroplastischen Polymeren kann bis zur endgültigen, irreversiblen Aushärtung (C-Zustand) noch mindestens einmal temperatur- und druckinduziert ein niedrigviskoser Materialzustand erreicht werden. Besonders geeignet für das erfindungsgemäße Verfahren sind zum einen Snapcure-Systeme, bei denen die endgültige Aushärtung sehr schnell erfolgen kann. Des Weiteren besonders geeignet sind Epoxidharze, die durch den Zusatz von Additiven so modifiziert sind, dass die Erweichungstemperatur des Harzes kleiner als die Vernetzungstemperatur, also die Temperatur, bei der die Aushärtungsreaktion ausgelöst wird, ist. Diese duroplastischen Harzsysteme sind schmelzbar und weisen damit Verarbeitungseigenschaften ähnlich denen thermoplastischer Polymere auf.

Zur Durchführung des erfindungsgemäßen Verfahrens wird durch die Anwendung von erhöhter Temperatur oder erhöhter Temperatur und erhöhtem Druck ein Zustand des duroplastischen Polymers der ersten und der zweiten Polymerschicht mit niedrigerer Viskosität als im Ausgangszustand induziert. Die Nanopartikel diffundieren aus der zweiten Polymerschicht in die erste Polymerschicht, und es wird ein Verbund gebildet, der die Gradientenschicht umfasst. Die Stabilisierung des Gradienten der Nanopartikelverteilung und das Aushärten des Verbunds erfolgt durch endgültige Konsolidierung des duroplastischen Polymers bei weiterer Temperatur- oder Temperatur- und Druckerhöhung.

In einer weiteren Ausführungsform des erfindungsgemäßen Verfahrens sind die Nanopartikel kohlenstoffbasiert, wie z. B. Graphen, Graphen-Derivate, Kohlenstoff-Nanoröhrchen (carbon nano tubes, CNT), deren Derivate, Kohlenstoff-Nanofasern (carbon nano fibres, CNF) oder auch Kombinationen aus diesen. Besonders bevorzugt werden CNT und/oder Graphen eingesetzt. Vorteilhaft führt die Modifikation mit kohlenstoffbasierten Nanopartikeln z. B. zu einer im Vergleich mit dem unmodifizierten polymeren Werkstoff erhöhten Zug- und Biegefestigkeit, erhöhten Kompressionsstabilität und/oder verbesserten Steifigkeit.

In einer weiteren Ausführungsform des erfindungsgemäßen Verfahrens wird vor der Herstellung des Multi-Material-Verbundes eine Vorbehandlung der Oberfläche der Metallschicht zumindest in dem Bereich, in dem die zweite Polymerschicht zwischen der Metallschicht und der ersten Polymerschicht angeordnet ist, durchgeführt, wodurch die Metallschicht mit mindestens einer haftverbessernden Oberflächenfunktion, beispielsweise in Form einer Mikrostrukturierung oder einer Beschichtung, versehen wird. Dies erfolgt mit dem Zweck, die Haftung zwischen der Metallschicht und der zweiten Polymerschicht zu verbessern. Möglichkeiten zur Haftverbesserung bestehen beispielsweise durch mechanische oder chemische Vorbehandlung der Metallschicht, z. B. durch Strahlen oder durch eine Laserstrukturierung oder durch Beschichtung der Metallschicht im Fügebereich mit einem Haftvermittler. Die lokale Modifizierung der Metallschicht im Fügebereich führt vorteilhaft zu besonders langlebigen Multi-Material-Verbunden.

In einer weiteren Ausführungsform des erfindungsgemäßen Verfahrens wird die zweite Polymerschicht in flüssigem oder festem Zustand auf die Metallschicht oder die erste Polymerschicht appliziert. Die Applikation der zweiten Polymerschicht erfolgt als vorkonfektionierter Werkstoff und lokal im Fügebereich des Multi-Material-Verbunds. Bei Applikation der zweiten Polymerschicht sind die Nanopartikel im polymeren Werkstoff statistisch verteilt. Der Gradient der Nanopartikelkonzentration wird erst im weiteren Verfahrensverlauf unter Einfluss der Parameter Druck und/oder Temperatur initiiert. Aufwändige Prozessschritte zur Erzeugung eines Gradienten der Nanopartikelkonzentration bereits bei der Herstellung der zweiten Polymerschicht sind erfindungsgemäß nicht notwendig.

In einer weiteren Ausführungsform des erfindungsgemäßen Verfahrens erfolgt die Applikation der zweiten Polymerschicht durch Sprühen oder Tauchen oder Beschichten oder Lackieren oder Einlegen oder eine Kombination zweier oder mehrerer dieser Methoden.

Einlegen bezieht sich dabei auf eine Applikation der zweiten Polymerschicht in Membranform. In diesen Membranen liegen beispielsweise die Nanopartikel als Partikelfüllstoff in einer Polymermatrix vor. Typischerweise können die Membranen Dicken von 100 µm bis 1 mm aufweisen.

In einer weiteren Ausführungsform des erfindungsgemäßen Verfahrens erfolgt die Bildung des Verbunds durch Heißpressen. Auch die Gradientenschicht bildet sich vorteilhaft erst während des Heißpressvorgangs aus.

Die Aufgabe der Erfindung wird des Weiteren gelöst durch einen Multi-Material-Verbund, der zumindest umfasst eine Metallschicht und eine faserverstärkte oder unverstärkte, erste Polymerschicht und eine Gradientenschicht, die zumindest bereichsweise zwischen der Metallschicht und der ersten Polymerschicht angeordnet ist. Die Gradientenschicht enthält das Polymer der ersten Polymerschicht und Nanopartikel. In der Gradientenschicht nimmt die Nanopartikelkonzentration räumlich von der Metallschicht zur ersten Polymerschicht hin graduell ab. In der Gradientenschicht des erfindungsgemäßen Multi-Material-Verbunds liegt also ein Gradient der Nanopartikelkonzentration vor, wobei die Nanopartikelkonzentration an der Grenzfläche der Gradientenschicht zur Metallschicht höher ist als an der Grenzfläche zur ersten Polymerschicht. Als Grenzfläche zwischen der ersten Polymerschicht und der Gradientenschicht bzw. als Beginn der Gradientenschicht ist derjenige Bereich anzusehen, in dem erstmalig Nanoteilchen vorhanden sind.

Vorteilhaft ist der erfindungsgemäße Multi-Material-Verbund besonders wenig anfällig gegenüber der Bildung und Ausbreitung von Rissen an der Grenzfläche zwischen metallischem und polymerem Werkstoff und damit besonders langlebig.

In einer Ausführungsform des erfindungsgemäßen Multi-Material-Verbunds ist das Polymer der ersten Polymerschicht und der Gradientenschicht ein thermoplastisches Polymer.

In einer anderen Ausführungsform des erfindungsgemäßen Multi-Material-Verbunds ist das Polymer der ersten Polymerschicht und der Gradientenschicht ein duroplastisches Polymer.

In einer weiteren Ausführungsform des erfindungsgemäßen Multi-Material-Verbunds sind die Nanopartikel, die in der Gradientenschicht enthalten sind, kohlenstoffbasiert. Vorzugsweise sind die Nanopartikel ausgewählt aus Graphen, Graphen-Derivaten, Kohlenstoff-Nanoröhrchen (carbon nano tubes, CNT), deren Derivaten, Kohlenstoff-Nanofasern (carbon nano fibres, CNF) oder Kombinationen aus diesen. Besonders bevorzugt werden CNT und/oder Graphen eingesetzt. Vorteilhaft führt die Modifikation mit kohlenstoffbasierten Nanopartikeln z. B. zu einer im Vergleich mit dem unmodifizierten polymeren Werkstoff erhöhten Zug- und Biegefestigkeit, erhöhten Kompressionsstabilität und/oder verbesserten Steifigkeit.

In einer weiteren Ausführungsform des erfindungsgemäßen Multi-Material-Verbunds weist die Metallschicht zumindest in dem Bereich, in dem die Gradientenschicht zwischen der Metallschicht und der ersten Polymerschicht angeordnet ist, eine haftverbessernde Oberfläche auf. Die Oberfläche kann beispielsweise eine Mikrostrukturierung oder eine haftvermittelnde Beschichtung aufweisen. Vorteilhaft führt die haftverbessernde Modifikation der Metalloberfläche im Fügebereich zu besonders langlebigen Multi-Material-Verbunden.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

Die Erfindung wird im Folgenden durch Ausführungsbeispiele anhand von schematischen, nicht maßstabsgetreuen Figuren erläutert, ohne auf diese beschränkt zu sein.

Dabei zeigt die
Fig. 1 zwei Schnittdarstellungen der Vorder- und der Seitenansicht, geschnitten entlang der Linie X-X, einer Anordnung von Komponenten zur Herstellung eines rotationssymmetrischen Multi-Material-Verbunds, und die
Fig. 2 zwei Schnittdarstellungen der Vorder- und der Seitenansicht, geschnitten entlang der Linie Y-Y, eines aus der Anordnung von Fig. 1 herstellbaren, rotationssymmetrischen Multi-Material-Verbunds.

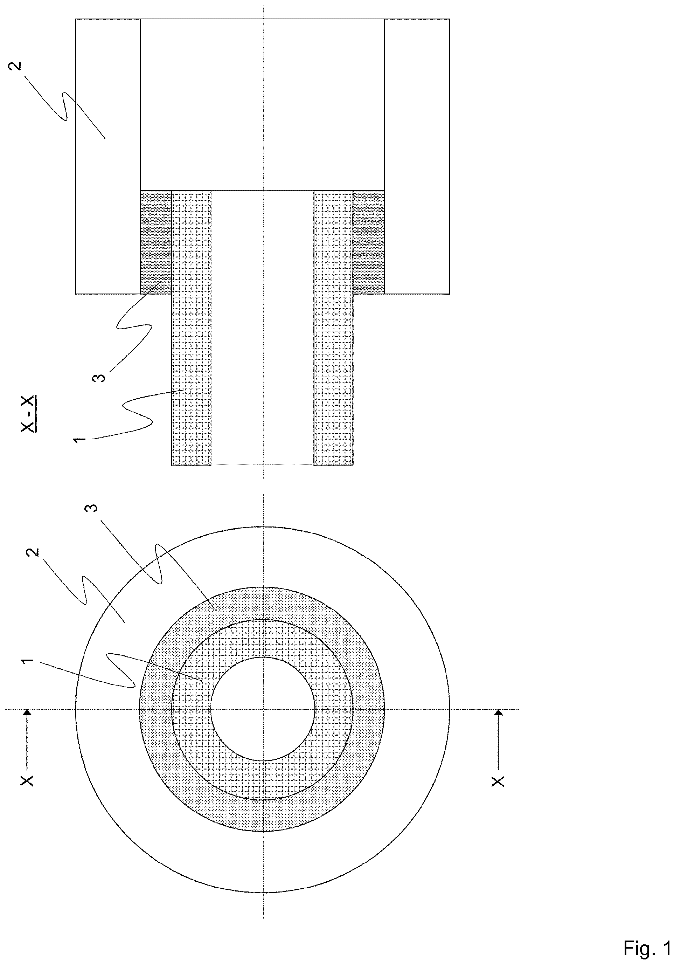

In Fig. 1 ist ein Ausführungsbeispiel einer Anordnung von Komponenten zur Herstellung eines rotationssymmetrischen Multi-Material-Verbunds gezeigt, die als Ausgangspunkt für das erfindungsgemäße Verfahren dienen kann. Zwischen einem rotationssymmetrischen, metallischen Bauteil 1 und einem rotationssymmetrischen, aus einem faserverstärkten Kunststoff bestehenden Bauteil 2 ist im Verbindungsbereich der beiden Bauteile 1 und 2 eine Schicht 3 angeordnet, die den gleichen Kunststoff wie das Bauteil 2 enthält, wobei dieser Kunststoff der Schicht 3 mit Nanopartikeln verstärkt ist. Die Komponenten 1, 2, und 3 sind jeweils separat gefertigt. Die Schicht 3 kann in Membranform vorliegen und beispielsweise auf der Oberfläche des metallischen Bauteils 1 platziert werden, bevor das Bauteil 2 in der in Fig. 1 gezeigten Anordnung relativ zu Bauteil 1 und Schicht 3 positioniert wird. Die Bildung einer Gradientenschicht (nicht dargestellt) erfolgt z. B. durch Heißpressen in dem Bereich der Anordnung, in dem die Schicht 3 zwischen den Bauteilen 1 und 2 angeordnet ist.

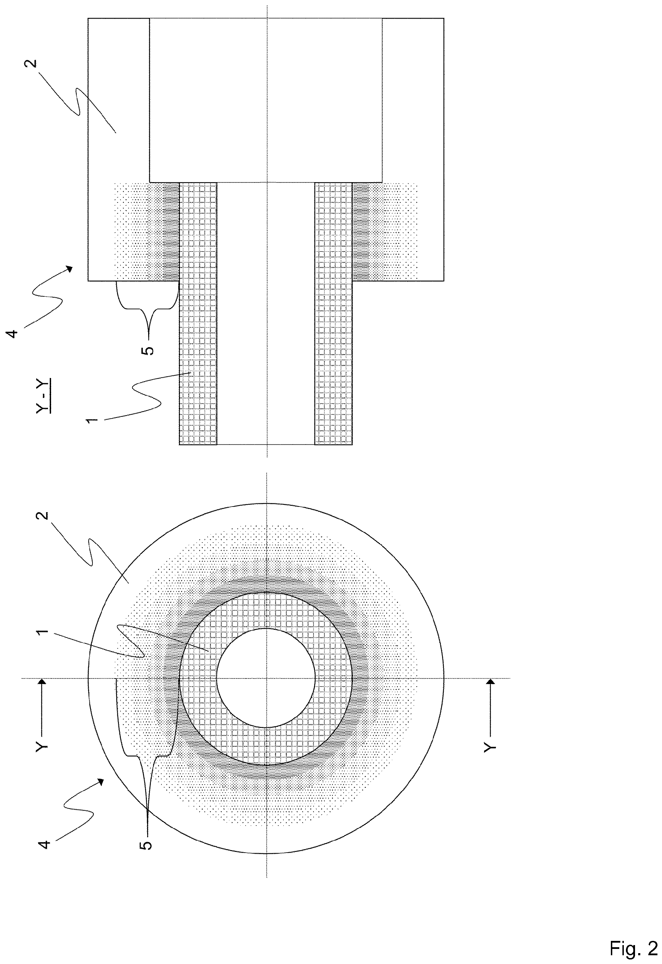

Fig. 2 zeigt ein Ausführungsbeispiel eines erfindungsgemäßen Multi-Material-Verbunds 4, der beispielsweise mittels des erfindungsgemäßen Verfahrens aus einer Anordnung wie der in Fig. 1 dargestellten hergestellt werden kann. Zwischen dem metallischen Bauteil 1 und dem Bauteil aus faserverstärkten Kunststoff 2 ist eine Gradientenschicht 5 angeordnet. Bei der Bildung des Multi-Material-Verbunds 4 und der Gradientenschicht 5 diffundieren Nanopartikel in den Kunststoff des Bauteils 2, so dass die radiale Ausdehnung der Gradientenschicht größer ist als die radiale Ausdehnung der in Fig. 1 gezeigten Schicht 3. In der Gradientenschicht nimmt die Konzentration von Nanopartikeln radial nach außen gerichtet, also zum Bauteil 2 hin, ab.

Die Erfindung ist nicht auf rotationssymmetrische Anordnungen begrenzt, sondern kann bei jeder Geometrie, die zum Fügen eines Multi-Material-Verbunds geeignet ist, angewendet werden.

### Bezugszeichen

- 1: Bauteil aus einem Metall
- 2: Bauteil aus einem faserverstärkten Kunststoff
- 3: Mit Nanopartikeln verstärkte Schicht aus Kunststoff
- 4: Multi-Material-Verbund
- 5: Gradientenschicht

## Patentansprüche

1. Verfahren zur Herstellung eines Multi-Material-Verbunds (4), bei dem aus mindestens einer Metallschicht (1), mindestens einer faserverstärkten oder unverstärkten ersten Polymerschicht (2) und mindestens einer aus dem Polymer der ersten Polymerschicht und Nanopartikeln gebildeten, faserverstärkten oder unverstärkten zweiten Polymerschicht (3), die zumindest bereichsweise zwischen der Metallschicht (1) und der ersten Polymerschicht (2) angeordnet ist, **dadurch gekennzeichnet, dass** unter Einfluss von erhöhter Temperatur oder erhöhter Temperatur und erhöhtem Druck ein Verbund gebildet wird, wobei Nanopartikel der zweiten Polymerschicht (3) in die erste Polymerschicht (2) diffundieren, so dass eine Gradientenschicht (5) gebildet wird, in der die Nanopartikelkonzentration zur ersten Polymerschicht (2) hin abnimmt.

2. Verfahren nach Anspruch 1, **dadurch gekennzeichnet, dass** das Polymer der ersten Polymerschicht (2) und der zweiten Polymerschicht (3) ein thermoplastisches Polymer ist.

3. Verfahren nach Anspruch 1, **dadurch gekennzeichnet, dass** das Polymer der ersten Polymerschicht (2) und der zweiten Polymerschicht (3) ein duroplastisches Polymer ist, welches eine mehrstufige Konsolidierungsfunktion aufweist.

4. Verfahren nach einem der Ansprüche 1 bis 3, **dadurch gekennzeichnet, dass** die Nanopartikel der zweiten Polymerschicht (3) kohlenstoffbasiert sind.

5. Verfahren nach einem der Ansprüche 1 bis 4, **dadurch gekennzeichnet, dass** zumindest in dem Bereich, in dem die zweite Polymerschicht (3) zwischen der Metallschicht (1) und der ersten Polymerschicht (2) angeordnet ist, eine Vorbehandlung der Metallschicht (1) durchgeführt wird, wodurch die Metallschicht (1) mit mindestens einer haftverbessernden Oberflächenfunktion versehen wird.

6. Verfahren nach einem der Ansprüche 1 bis 5, **dadurch gekennzeichnet, dass** die zweite Polymerschicht (3) in flüssigem oder festem Zustand auf die Metallschicht (1) oder die erste Polymerschicht (2) appliziert wird.

7. Verfahren nach einem der Ansprüche 1 bis 6, **dadurch gekennzeichnet, dass** die Applikation der zweiten Polymerschicht (3) durch Sprühen oder Tauchen oder Beschichten oder Lackieren oder Einlegen oder eine Kombination zweier oder mehrerer dieser Methoden erfolgt.

8. Verfahren nach einem der Ansprüche 1 bis 7, **dadurch gekennzeichnet, dass** die Bildung des Verbunds durch Heißpressen erfolgt.

9. Multi-Material-Verbund (4), umfassend mindestens eine Metallschicht (1) und mindestens eine faserverstärkte oder unverstärkte erste Polymerschicht (2), **dadurch gekennzeichnet, dass** zumindest bereichsweise zwischen der Metallschicht (1) und der ersten Polymerschicht (2) eine Gradientenschicht (5) angeordnet ist, die das Polymer der ersten Polymerschicht (2) und Nanopartikel enthält, in der die Nanopartikelkonzentration räumlich von der Metallschicht (1) zur ersten Polymerschicht (2) hin graduell abnimmt.

10. Multi-Material-Verbund (4) nach Anspruch 9, **dadurch gekennzeichnet, dass** das Polymer ein thermoplastisches Polymer ist.

11. Multi-Material-Verbund (4) nach Anspruch 9, **dadurch gekennzeichnet, dass** das Polymer ein duroplastisches Polymer ist.

12. Multi-Material-Verbund (4) nach einem der Ansprüche 9 bis 11, **dadurch gekennzeichnet, dass** die Nanopartikel kohlenstoffbasiert sind.

13. Multi-Material-Verbund (4) nach einem der Ansprüche 9 bis 12, **dadurch gekennzeichnet, dass** zumindest in dem Bereich, in dem die Gradientenschicht (5) zwischen der Metallschicht (1) und der ersten Polymerschicht (2) angeordnet ist, die Metallschicht (1) eine haftverbessernde Oberfläche aufweist.

## Claims

1. A method for producing a multi-material composite, wherein a composite is formed from at least one metal layer (1), at least one fibre-reinforced or unreinforced first polymer layer (2) and at least one fibre-reinforced or unreinforced second polymer layer (3) formed from the polymer of the first polymer layer and nanoparticles, said second polymer layer (3) being at least partially arranged between the metal layer (1) and the first polymer layer (2), under the influence of elevated temperature or elevated temperature and elevated pressure a composite is formed, wherein nanoparticles of the second polymer layer (3) diffuse into the first polymer layer (2) so that a gradient layer (5) is formed in which the nanoparticle concentration decreases toward the first polymer layer (2).

2. The method according to claim 1, **characterized in that** the polymer of the first polymer layer (2) and of the second polymer layer (3) is a thermoplastic polymer.

3. The method according to claim 1, **characterized in that** the polymer of the first polymer layer (2) and of the second polymer layer (3) is a thermosetting polymer having a multistage consolidation function.

4. The method according to any of claims 1 to 3, **characterized in that** the nanoparticles of the second polymer layer (3) are carbon-based.

5. The method according to one of claims 1 to 4, **characterized in that** at least in the region in which the second polymer layer (3) is arranged between the metal layer (1) and the first polymer layer (2), a pre-treatment of the metal layer (1) is carried out, whereby the metal layer (1) is provided with at least one adhesion-enhancing surface function.

6. The method according to one of claims 1 to 5, **characterized in that** the second polymer layer (3) is applied in a liquid or solid state to the metal layer (1) or to the first polymer layer (2).

7. The method according to one of claims 1 to 6, **characterized in that** the second polymer layer (3) is applied by spraying or dipping or coating or painting or inserting or a combination of two or more of these methods.

8. The method according to any of claims 1 to 7, **characterized in that** formation of the composite is carried out by hot pressing.

9. A multi-material composite comprising at least one metal layer (1) and at least one fibre-reinforced or unreinforced first polymer layer (2), **characterized in that** a gradient layer (5) containing the polymer of the first polymer layer (2) and nanoparticles is arranged at least partially between the metal layer (1) and the first polymer layer (2), the nanoparticle concentration gradually decreasing spatially from the metal layer (1) to the first polymer layer (2) in said gradient layer (5).

10. The multi-material composite according to claim 9, **characterized in that** the polymer is a thermoplastic polymer.

11. The multi-material composite according to claim 9, **characterized in that** the polymer is a thermosetting polymer.

12. The multi-material composite according to any of claims 9 to 11, **characterized in that** the nanoparticles are carbon-based.

13. The multi-material composite according to any of claims 9 to 12, **characterized in that** the metal layer (1) has an adhesion-enhancing surface at least in the region in which the gradient layer (5) is arranged between the metal layer (1) and the first polymer layer (2).

## Revendications

1. Procédé de fabrication d'un composite à matériaux multiples (4), constitué d'au moins une couche métallique (1), d'au moins une première couche de polymère (2) renforcée par des fibres ou non renforcée, et d'au moins une seconde couche de polymère (3) renforcée par des fibres ou non renforcée, formée du polymère de la première couche de polymère et de nanoparticules, laquelle seconde couche de polymère est disposée au moins dans certaines zones entre la couche métallique (1) et la première couche de polymère (2), **caractérisé en ce qu'**un composite est formé sous l'influence d'une température élevée ou d'une température et d'une pression élevées, les nanoparticules de la seconde couche de polymère (3) se diffusant dans la première couche de polymère (2), de manière à former une couche à gradient (5) dans laquelle la concentration en nanoparticules diminue vers la première couche de polymère (2).

2. Procédé selon la revendication 1, **caractérisé en ce que** le polymère de la première couche de polymère (2) et de la seconde couche de polymère (3) est un polymère thermoplastique.

3. Procédé selon la revendication 1, **caractérisé en ce que** le polymère de la première couche de polymère (2) et de la seconde couche de polymère (3) est un polymère thermodurcissable qui présente une fonction de consolidation en plusieurs étapes.

4. Procédé selon l'une des revendications 1 à 3, **caractérisé en ce que** les nanoparticules de la seconde couche de polymère (3) sont à base de carbone.

5. Procédé selon l'une des revendications 1 à 4, **caractérisé en ce qu'**un prétraitement de la couche métallique (1) est effectué au moins dans la zone dans laquelle la seconde couche de polymère (3) est disposée entre la couche métallique (1) et la première couche de polymère (2), de sorte que la couche métallique (1) est pourvue d'au moins une fonction de surface améliorant l'adhérence.

6. Procédé selon l'une des revendications 1 à 5, **caractérisé en ce que** la seconde couche de polymère (3) est appliquée sur la couche métallique (1) ou sur la première couche de polymère (2) à l'état liquide ou solide.

7. Procédé selon l'une des revendications 1 à 6, **caractérisé en ce que** la seconde couche de polymère (3) est appliquée par pulvérisation ou trempage ou revêtement ou laquage ou insertion ou par une combinaison de deux ou plus de ces méthodes.

8. Procédé selon l'une des revendications 1 à 7, **caractérisé en ce que** le composite est formé par pressage à chaud.

9. Composite à matériaux multiples (4), comprenant au moins une couche métallique (1) et au moins une première couche de polymère (2) renforcée par des fibres ou non renforcée, **caractérisé en ce qu'**une couche à gradient (5) contenant le polymère de la première couche de polymère (2) et des nanoparticules est disposée au moins dans certaines zones entre la couche métallique (1) et la première couche de polymère (2), la concentration en nanoparticules dans la couche à gradient diminuant progressivement dans l'espace de la couche métallique (1) à la première couche de polymère (2).

10. Composite à matériaux multiples (4) selon la revendication 9, **caractérisé en ce que** le polymère est un polymère thermoplastique.

11. Composite à matériaux multiples (4) selon la revendication 9, **caractérisé en ce que** le polymère est un polymère thermodurcissable.

12. Composite à matériaux multiples (4) selon l'une des revendications 9 à 11, **caractérisé en ce que** les nanoparticules sont à base de carbone.

13. Composite à matériaux multiples (4) selon l'une des revendications 9 à 12, **caractérisé en ce que**, au moins dans la zone dans laquelle la couche à gradient (5) est disposée entre la couche métallique (1) et la première couche de polymère (2), la couche métallique (1) comporte une surface améliorant l'adhérence.
